Europäisches Patentamt

European Patent Office

Office européen des brevets

(11) Publication number: **0 456 916 A1**

# EUROPEAN PATENT APPLICATION

(21) Application number: 90201563.5

(22) Date of filing: 18.06.90

(51) Int. Cl.5: **B60R 25/04**, G07C 5/08

(30) Priority: 11.05.90 ES 9001332

(43) Date of publication of application:
21.11.91 Bulletin 91/47

(84) Designated Contracting States:
AT BE CH DE DK FR GB GR IT LI LU NL SE

(71) Applicant: TELETTRA ESPANA, S.A.
Raimundo Fernandez Villaverde, 65
E-28003 Madrid(ES)

(72) Inventor: Torcida Fernandez de Troconiz,
Rafael Santos
Diego de Torres, 8 4oC
E-28801 Alcala De Henares (Madrid)(ES)
Inventor: Aguilar Perez, José Luis
Felipe II, 4 esc. Izda. 6oB
E-28804 Alcala de Henares (Madrid)(ES)

(74) Representative: Ungria Lopez, Javier et al
Avda. Ramon y Cajal, 78
E-28043 Madrid(ES)

(54) **Integral protection system for vehicles.**

(57) It prevents functioning of the engines and stores data regarding maintenance of the vehicle (20.) It has an intelligent card (1) reader/writer terminal (2) which is connected to a central processing unit (3) which in turn is connected to a RAM memory (5), a ROM memory (4) and to a control and entry/output circuit (6) to which a plurality of sensors (7) are connected configuring the breakless ignition and other functions.

The functioning program included in the ROM memory (4) is incomplete and is completed by means of the intelligent card (1) prior introduction of a personal identification number (PIN.)

The information corresponding to the data of the vehicle (20) is stored on the intelligent card (1) by means of some terminals (21) placed in the service shops (25) which are connected to a data processing center (24) through a communication network (23) for knowledge of the data referring to the vehicle on the part of shops, user and manufacturer.

FIG.I

## OBJECT OF THE INVENTION

The present invention, as is expressed in the title of this specification, consists of an integral protection system for vehicles whose purpose is to furnish protection against theft of motor vehicles, preventing the functioning of the engine if the system does not authorize it.

Besides, the invention in question has the purpose of permitting the "historic" transfer of the vehicle from the point of view of maintenance, permitting adequate control of the warranty period as well as of the repairs and replacements of parts effected.

On the other hand, the invention has the purpose of presenting a psychological barrier to the driver, when he is not in the condition to drive (drunk, sleepy, etc.)

The invention prevents the functioning of the engine totally electronically, not effecting cuttings off of electric conductors, as is conventionally done.

## BACKGROUND OF THE INVENTION

Conventionally, theft protection systems for motor vehicles by means of cutting off electric conductors, in such a way that upon effecting said cuttings off it is impossible to start the engine, are known.

The cutting of is done physically either by means of a switch, or a contact wheel, having the inconvenience that a jumper can be effected in said switch or contact wheel, thereby permitting the engine to start.

Obviously, it is simple to make a jumper, thus it was chosen to put said switches, contact wheels, etc. in hidden places of the vehicles, which makes it difficult to make the jumper, a difficulty which in no case prevents said jumper from being made since the only thing achieved by placing the switches, contact wheels, etc. in hidden places is that it takes longer to make the jumper. Making the jumper itself is not avoided.

Systems which by means of keying a code makes it possible to connect the different cuttings off made in the electric cables, which slightly increases the difficulty in effecting one or several jumpers are known. The possibility of doing so does not disappear.

## DESCRIPTION OF THE INVENTION

In order to solve the above cited inconveniences, the invention makes an integral protection system for vehicles possible whose purpose is to prevent the functioning of a motor vehicle without cutting off electric conductors, but rather on the contrary making a totally electronic system which governs the starting of the engine possible, in such a way that it is practically impossible to start the engine, unless the proper signals which generate the electronic control circuit are introduced, for which purpose it would be necessary to know exactly the functioning and treatment that said circuit effects on the different signals.

In this way, the invention consists of an integral protection system for vehicles whose purpose is to prevent the functioning of the engine and any other device whose control may be entrusted to an electronic system such as for example a radio-cassette player, radiotelephone, etc. Another purpose is to store data concerning maintenance of said engine for which reason it has an intelligent card (chip card) reader/writer terminal placed inside the vehicle, and which is connected to a central processing unit, which in turn is connected to a volatile RAM memory, to a ROM memory and to a control and entry/output circuit to which a plurality of sensors are connected, configuring the breakless ignition and other functions.

The functioning program of the intelligent card reader/writer terminal is included in the ROM memory thereof and has been introduced in an incomplete manner, thus in order for the terminal to function it is essential to introduce in the volatile RAM memory the information corresponding to the part that completes the functioning program of the system.

Said program part is included in the ROM memory of the intelligent card, in such a way that upon connecting said intelligent card to the terminal, prior introduction of a personal indentification number (PIN), the portion of the program included on the intelligent card is transferred to the RAM memory with which the central processing unit permits the function of breakless ignition and therefore the starting of the vehicle.

Once the intelligent card is removed from the reader, and the feed cut of the RAM memory is produced, the portion of the program included in it is erased, thus the system remains inoperative, thus preventing the possibility of starting the car in any manner, with the exception of introducing again the portion of the program in the cited RAM memory.

The personal identification number permits the transfer of the program from the intelligent card to the RAM memory, effecting said transfer by cryptographing techniques, whereby the information does not travel clearly, preventing the capture of that which would be the correct information which must be sent to the central processing unit in order to make the starting of the engine possible.

Besides, it should be pointed out that the personal identification number to be introduced can be of several types, such that there is one which permits the functioning of the engine for a certain period of time, after which the engine stops, thus preventing theft of the vehicle by intimidation.

Besides, the reader/writer terminal includes the central processing unit, the RAM memory, and the ROM memory, in a single integrated circuit, in such a way that said terminal is inviolable.

The intelligent card is capable of being connected to a new terminal placed in a service shop, to introduce different data, such as data regarding repairs made, replacement of parts, maintenance, etc., in such a way that the owner of the vehicle keeps the "historic" data of the vehicle stored on the intelligent card itself.

The terminals placed in the service shops are capable of being connected to a data center through public or private communication networks, so that it is possible to transmit the data concerning each vehicle to the control center, allowing the elaboration of statistics, warranty control, as well as control of functioning of different vehicles, etc.

Given the characteristics of the intelligent card and that the information contained on it can be transferred to a data center, it is possible to have a financing service, credit payment of the service, for which purpose the intelligent card is used as a user identification and/or validation means.

Afterwards to facilitate a better understanding of this specification and as an integral part thereof, a series of figures in which with an illustrative and non-restrictive manner the object of the invention has been represented are attached.

## BRIEF DESCRIPTION OF THE FIGURES

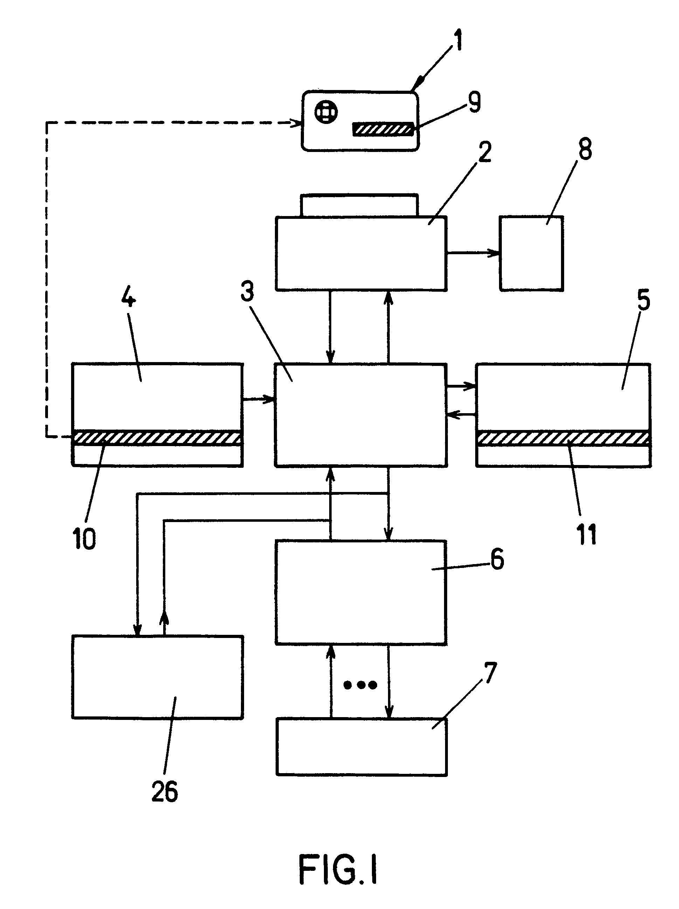

Figure 1.- It shows a functional electronic block diagram of the integral protection system for vehicles, in accordance with the invention.

Figure 2.- It shows a functional electronic diagram of the terminal placed in the inside of the vehicle, by means of which the intelligent card is read.

Figure 3.- It shows a possible embodiment of an information distribution network, wherein it is possible to use the card as a storage means of the "historic" data of the vehicle, so that said data can be transmitted through the network to a data center for the processing thereof.

## DESCRIPTION OF A PREFERRED EMBODIMENT OF THE INVENTION

Hereinafter a description of the invention based on the above cited figures is made.

Thus, the invention consists of an integral protection system for vehicles whose purpose is to prevent the functioning of the engine and any other device whose control can be entrusted to an electronic system such as for example a radio-cassette player, radiotelephone, etc. Another object is to store data concerning the maintenance of the engine. Besides, it presents a psychological barrier to the driver when he is not in a condition to drive, for example because he is drunk, sleepy, etc.

Besides, the invention in question allows from the data stored concerning maintenance of vehicles the transfer of said data from the point of view of maintenance to a control center for the processing of said data, furnishing statistics, parts that cause the most failures, adequate control of the warranty period, etc.

In order to obtain the above cited objectives, the invention has an intelligent card (chip card) reader/writer terminal (2) which remains included in the corresponding vehicle (20.)

The intelligent card (1) is connected to the reader/writer terminal (2) in order to permit the functioning of the entire system.

On the other hand, the intelligent card (chip) reader/writer terminal (2) is connected to a central processing unit (3) which in turn is connected to a ROM memory (4), a volatile RAM memory (5) and to a control and entry/output circuit (6) to which a plurality of sensors (7) are connected configuring the breakless ignition and other functions.

The reader/writer terminal (2) is capable of being connected to a printer (8) to print the different data stored on the intelligent card (1) referring to the maintenance of the engine of the vehicle (20.)

The ROM memory (4) includes the functioning program of the entire system, it being provided that said functioning program stored in the cited memory is incomplete, this particular feature being referred to as number (10) which tries to indicate the program portion required to complete the entire functioning program of the system.

In this way, the system does not function until the part of the program which has not been stored in cited ROM memory (4) is completed.

Hence, in order to complete the cited program, this is stored on the intelligent card (1). This feature has been referred to as number (9) and this indicates the program portion missing from the ROM memory (4) indicated by reference number (10.)

In order for the intelligent card (1) to transfer the program portion (9) which completes the program of the ROM memory (4) referred to as (10), it is necessary to previously key in the reader/writer terminal (2) a personal identification number (PIN) by means of which the transfer of the program (9) stored on the intelligent card (1) to the RAM memory (5) is made possible, said program portion being stored in the area (11) of the RAM memory (5) in such a way that the central processing unit (3) manages the complete functioning program of the system, permitting the starting of the engine of the vehicle (20.)

Once the system is disconnected, the program portion (11) stored in the RAM memory (5) is erased whereby the system remains unserviceable, making it impossible to start the vehicle.

Of the above, it should be pointed out that by means of the system of the invention, it is impossible to effect the starting of the engine by means of jumping wires, a possibility which the conventional systems present, thus the invention provides a totally foolproof system as well as the possibility of storing and transferring data, as it has been stated above.

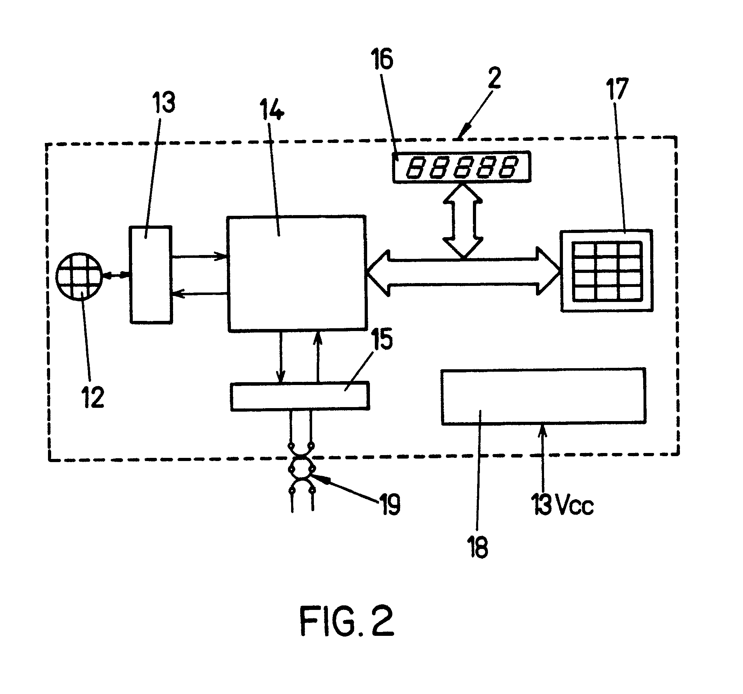

The reader/writer terminal (2) has a general configuration like the one represented in figure 2.

Thus, the intelligent card (1) reader/writer terminal (2) is made up of a special connector (12) to effect the connecting of the cited intelligent card (1.)

The connector (12) is connected to an interface (13) which in turn is connected to a central processing unit, which also includes a ROM memory and a RAM memory, all of which is referred to by number (14.)

The block (14) is connected to a keyboard (17) and to alphanumeric indicator (16) in order to effect the introduction of the personal identification number (PIN) and to show said number by means of the alphanumeric indicator (16) as well as to show other types of information concerning the vehicle stored on the intelligent card (1.)

The block (14) is connected to a second interface (15) by means of which and through a single pair of wires (19), the system of the invention is connected to the central processing unit (3.)

Besides, the reader/writer terminal (2) has the corresponding feed source (18) through which each one of the elements which make up said reader/writer terminal (2) is fed, making the functioning thereof possible.

The intelligent card (1) basically consists of an E²PROM memory, as well as a microprocessor in such a way that it is possible to effect the change of the personal identification number of the user, as well as other functions which will be specified later on.

The program part (9) included on the intelligent card (1) is transferred to the reader/writer terminal (2) by means of the cryptographing of the program and by means of a variable key which determines the (pseudorandom) start sequence number. This number must coincide in the reader/writer terminal (2) and on the intelligent card (1), otherwise it will not be possible to decipher the program portion (consisting of the route or routes that complete the functioning program of the system), permitting the functioning of the engine.

The information which is transferred from the reader/writer terminal (2) towards the central processing unit (3) is capable of being transferred clearly and thus it would be possible to capture said information and simulate the link between the reader/writer terminal (2) and the central processing unit (3.)

In order to prevent this, the information to be transferred from the reader/writer terminal (2) towards the central processing unit establishes a codified recognition protocol with sequence control or the deciphering of the corresponding program part is done, in the central processing unit (3), just like the sequence control, whereby the information passed from the reader/writer terminal (2) cannot be captured.

Along with the protection system that transfers the block of information needed for the functioning of the engine, a system of identification by means of keys which in turn is the basis for the creation of an added value system supported by the above described elements which make up the system of the invention is established.

Thus, the system of the invention just as it has been indicated above, permits the identification of several services by means of the personal identification number (PIN.)

By means of the program, this personal identification number can be initially assigned by the manufacturer and secretly supplied to the user. It may be changed by the user himself upon use of the key furnished by the manufacturer.

By means of programming it is possible for the personal identification number to be temporary, in other words, upon said number being established a maximum validity period is set after which the intelligent card (1) is not valid.

Likewise, the personal identification number can be programmed in such a way that it permits by means of the key establishing a maximum period of functioning of the engine, after which the engine stops. In this way this code can be used in the face of coercion of the owner to start the engine. By means of introducing this personal identification number the engine will start and after the programmed time, for example, one or two minutes, the engine will stop. Thus, the attempt to rob the vehicle by means of coercion remains thwarted.

Upon the intelligent card (1) having a certain data storage capacity, the card can support an information file with maintenance data. In this way the user can know the evolution of his vehicle and the dates of servicing thereof (changing of oil, recommended checkups, etc.) Likewise, these data (which may or may not be personalized) are of great interest to the manufacturer of the vehicle, who thus has a source of information in real automatizable time of the performance of his manufactured goods.

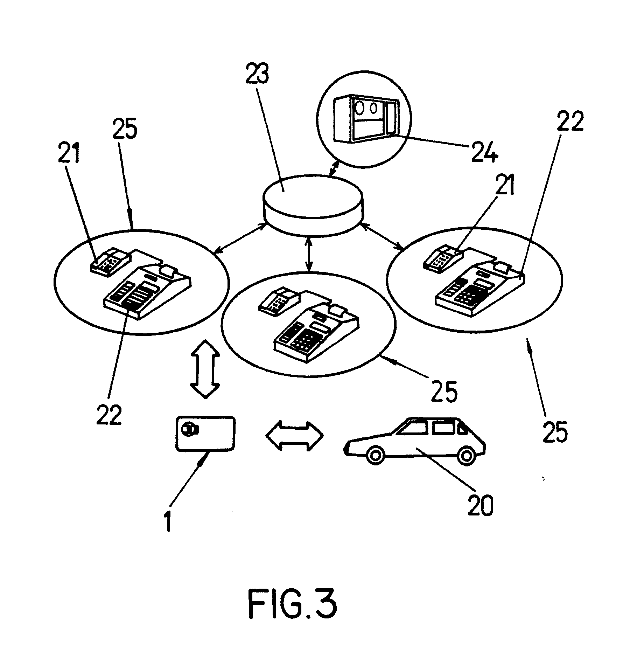

In order to make this source of information possible, it is necessary to establish an information network such as the one represented in figure 3 for example.

Thus in said figure 3, by means of reference number 25 the unit formed by a terminal (21) to read the intelligent card (1) as well as a microprocessor (22) has been represented. The unit remains connected to a communucations network (23), which may either be public or private, through which it is connected with a data processing center (24) with which the manufacturer has a source of information in real automatizable time of the performance of his manufactured goods.

In order to implement this service, the typified and codified information regarding breakdowns / maintenance operations, together with the code of the parts/materials used, is stored in the E²PROM memory of the intelligent card (1) as a consultable file. The information is introduced by the terminal (21) which through the microprocessor (22) transfers it through the communications network (23) up to the data processing center (24.)

The communications network (23) can be, for example, the public telephone network.

Thus for example the servicing date, kilometers really travelled by the vehicle, identification of the shop, breakdown/operation code including the materials used may be included on the intelligent card (1.)

The storage of these data on the intelligent card (1) is not permanent, to the effect that when all the space available in the memory of the intelligent card (1) has been used up, the oldest data will be erased so that other new data fits.

Besides, it should be pointed out that by means of the use of the intelligent card (1) it is possible to pay by credit/financing, since due to the features of the intelligent card (1) and of the communications system, a financing service, which uses the intelligent card (1) as a user identification and/or validatoin means, can be easily effected.

In this way, figure 3 represents the units 25 which are included in the different service shops, unit which is made up of the terminal (21) and the microprocessor (22), just as it has been explained above. This way when the vehicle (20) uses the service shop the intelligent card (1) is furnished and it is connected in the terminal (21) for the introduction of the data of the operations carried out in said service shop, which in turn can know the history of the vehicle (20) making the repair work easier on some occasions. Then, this information is sent by the communications network (23) to the data processing center (24), just as it has been stated above.

In this way, by means of the present invention an integral protection system for vehicles is provided. It prevents the functioning of the engine and it also stores data concerning maintenance of the vehicle and it makes it impossible for the user to start up the same if he is not in the condition to drive, in other words, if he is drunk, sleepy, etc., since under these circumstances the user will not be capable of introducing the personal identification number correctly.

The central processing unit (3) is capable of being connected, by means of interface (15) and the pair of wires (19) to an identification and entry/output circuit (26) which is included in an electronic device, such as a radio-cassette player, for example, for the control of the functions thereof, thus determining a sure and efficient protection against theft of said device just as it has been described above, since this will only function by means of the described devices and data coming from the user.

## Claims

1. Integral protection system for vehicles whose purpose is to prevent the functioning of the engine, as well as to store data concerning maintenance of the vehicle, for which purpose it is essentially characterized because it has an intelligent card (chip card) (1) reader/writer terminal (2) included in the vehicle (20) and which is connected to a central processing unit (3) which in turn is connected to a volatile RAM memory (5), to a ROM memory (4) and to an entry/output circuit (6) to which a plurality of sensors (7) are connected configuring the breakless ignition and other functions of the vehicle (20); it being provided that the functioning program of the system included in the ROM memory (4) is incomplete (10); and with the particular feature that the intelligent card (1) includes the program portion (9) which completes the program portion included in the ROM memory (4), so that upon connecting said intelligent card (1) to the reader/writer writer terminal (2), prior introduction of a personal identification number (PIN), the program portion (9) included on the intelligent card (1) is transferred to the RAM memory (5) (11) with which the central processing unit (3) carries out the function of the breakless ignition and therefore the starting of the vehicle upon turning the key, erasing the program portion (11) included in the RAM memory (4) upon disconnecting the system, which remains protected.

2. Integral protection system for vehicles, according to claim 1, characterized because the intelligent card (1) is capable of being connected to a terminal (21) placed in a service shop (25) and remains controlled by a microprocessor (22), for the introduction of the different repair and maintenance data on said intelligent card (1), storing the "historic" data of the vehicle; it being provided that said terminals (21) placed in the service shops (25) are capable of being connected to a data processing center (24) through public or private communications networks (23), making it possible to elaborate statistics, warranty control and a control of the functioning of the different vehicles.

3. Integral protection system for vehicles, according to the above claims, characterized because the transfer of the program portion (9) from the intelligent card (1) to the RAM memory is done by crytographing.

4. Integral protection system for vehicles, according to claim 1, characterized because the reader/writer terminal (2) placed in the vehicle (20) includes the central processing unit, the ROM memory and the RAM memory in a single integrated circuit (14), in such a way that said reader/writer terminal (2) is inviolable.

5. Integral protection system for vehicles, according to the above claims, characterized because the personal identification number is capable of validating the intelligent card (1) for a certain period of time, it also being provided that it is capable of permitting the functioning of the engine for a certain period of time, after which it stops.

6. Integral protection system for vehicles, according to the above claims, characterized because it is capable of being connected to an electronic device such as for example a radio-cassette player, radiotelephone, for which purpose the latter includes an identification and entry/output circuit (26) which controls the functions of the device.

FIG.1

FIG. 2

**FIG.3**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 612 319 (POLLEN INFORMATIQUE S.A.) * page 1, line 16 - page 4, line 12 * * page 7, line 31 - page 8, line 6 * * claims 1-5; figures * | 1-3 | B 60 R 25/04 G 07 C 5/08 |
| Y | EP-A-0 191 162 (INTERNATIONAL BUSINESS MACHINES CO.) * column 2, lines 22 - 37; figure 1 * | 1-3 | |
| A | WO-A-8 803 884 (ANDERSSON, OVE) * page 2, line 30 - page 3, line 14 * * page 7, line 28 - page 8, line 7 * * claim 1; figure 1 * | 1,4,6 | |
| A | FR-A-2 619 065 (GARAGES NULTISERVICES FRANCAIS) * page 2, lines 11 - 19; claims 7-9 * | 1,2 | |
| A | US-A-4 805 722 (KEATING ET AL.) * column 1, lines 43 - 50 * * column 2, lines 8 - 22; figures 1, 3 * | 1,2 | |
| A | PATENT ABSTRACTS OF JAPAN vol. 7, no. 217 (M-245)(1362) 27 September 1983, & JP-A-58 110340 (HINO JIDOSHA KOGYO K.K.) 30 June 1983, * the whole document * | 1,4 | TECHNICAL FIELDS SEARCHED (Int. Cl.5) B 60 R G 07 C G 06 F |

The present search report has been drawn up for all claims

| Place of search | Date of completion of search | Examiner |
|---|---|---|
| The Hague | 21 August 91 | AREAL CALAMA A. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document